# EUROPEAN PATENT SPECIFICATION

(11) **EP 4 576 231 B1**
(45) Date of publication and mention of the grant of the patent: **11.11.2026**
(21) Application number: 23217495.3
(22) Date of filing: 18.12.2023
(51) Int. Cl.: H01M 4/04, H01M 4/139

(54) **A METHOD OF TREATING A COATING LAYER OF AN ELECTRODE**
VERFAHREN ZUR BEHANDLUNG EINER BESCHICHTUNG EINER ELEKTRODE
PROCÉDÉ DE TRAITEMENT D'UNE COUCHE DE REVÊTEMENT D'UNE ÉLECTRODE

(43) Date of publication of application: 25.06.2025
(73) Proprietor: Customcells Holding GmbH, 25524 Itzehoe (DE)
(72) Inventor: Paulus, Alexander, 25524 Itzehoe (DE)
(74) Representative: LKGLOBAL Partnerschaftsgesellschaft mbB

(56) References cited:
- EP-A1- 4 287 288
- CN-U- 219 356 763
- JP-B2- 6 327 074

## Description

### FIELD OF THE DISCLOSURE

The present disclosure relates to a method of treating a coating layer of an electrode, in particular for an energy storage device.

### BACKGROUND

Batteries play a critical role in modern society, powering a wide range of devices from portable electronics to electric vehicles. The increasing demand for portable electronics and electric vehicles has led to a growing need for batteries with higher energy density, longer life-span, and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency of battery production, in particular the production of battery electrodes as a part of lithium-ion batteries and lithium metal batteries. Battery electrodes are typically conductive materials that may serve as a positive or negative terminal in a battery.

In the context of electrode production, it has been established to coat a substrate film with an active material. The first step of coating usually involves mixing active materials and different components resulting in a coating mass known as slurry. Besides the active materials, the slurry may comprise a conductive additive (e.g. carbon black or carbon nanotubes), other additives, a binder (e.g. PVDF), and a solvent. The binder may ensure a cohesive electrode structure and the slurry's adhesion to the substrate film. The conductive additives' and the additives' task may be to increase the slurry's conductivity. The solvent may facilitate the even dispersion of active materials, conductive additives, binder, and other additives, ensuring a homogeneous slurry.

The mixing process of the slurry usually comprises a step of dry mixing and a subsequent step of wet mixing. Dry mixing, using low or high energy, aim to thoroughly cover active materials with carbon black. Subsequently, wet mixing with solvent forms the slurry, initially agglomerated but may be made homogeneous through thorough stirring. Diverse mixing systems, techniques, temperatures, and stringent requirements may ensure quality. The slurry may meet specific parameters for homogeneity and viscosity for a safe coating process, considering changes over time that require rapid processing.

In a further step, the substrate film may be coated with the paste-like or almost liquid slurry using an application tool (e.g. slot die, doctor blade, anilox roller). After coating, the substrate film may pass through a drying channel. The solvent is removed from the slurry by applying heat in the drying channel.

The demand for lithium-ion batteries, especially for electric vehicles, requires higher energy capacities, cost efficiency and faster charging options. Increasing the electrode thickness is a viable strategy to improve the energy capacity of cells while reducing costs. This beneficial result comes from increasing the proportion of active material relative to inactive material within the cell. However, a higher load often results in less (i.e. slower) movement of the lithium-ions (Li-ions) across thicker electrodes due to the longer ways (i.e. increased electrode thickness). Less ion movement leads to significant fluctuations in lithium concentration from the separator to the current collector, which can limit the usable capacity of the electrodes and promote irreversible lithium plating.

Enhancing ion movement within electrodes, in particular within the active material, has been achieved through the development of pore networks, notably reducing electrode tortuosity and thereby improving both energy density and rate performance. Researchers have explored diverse techniques to engineer electrode structures featuring voids or larger pores customized to enhance electrolyte penetration and Li-ion transport. These methods encompass magnetic particle alignment, co-extrusion, controlled mud-cracking, freeze casting, and the inclusion of pore formers. Notably, the use of short-pulsed lasers has emerged to create micropores or channels within various Li-ion battery electrodes. These laser-patterned microstructures establish efficient pathways for Li-ion movement throughout the electrode, curbing electrolyte concentration discrepancies and lowering the electrochemical overpotentials that can lead to lithium plating.

However, these methods have proven to be disadvantageous in many respects.

Techniques involving magnetic particle alignment have shown to generate impurities and could potentially accelerate material aging, as detailed in the following literature:
Billaud, J., Bouville, F., Magrini, T., Villevieille, C., & Studart, A. R. (2016). Magnetically aligned graphite electrodes for high-rate performance Li-ion batteries. Nature Energy, 1(8), 1-6.
   And
Zhang, X., Julien, C. M., Mauger, A., & Gendron, F. (2011). Magnetic analysis of lamellar oxides for Li-ions batteries. Solid State Ionics, 188(1), 148-155.

US10675819B2 describes a method for the production of porous articles using magnetic fields. The method comprises exposing a precursor composition of a porous article to a magnetic field which causes longitudinal axes of elongated regions of emulsion droplets within a fluid of the precursor to become substantially aligned with each other.

However, in addition to the drawbacks of impurities and accelerated material aging, this method might result in a more complex electrode manufacturing process, accompanied by increased costs.

### SUMMARY OF THE DISCLOSURE

Currently, it remains desirable to overcome the aforementioned problems and in particular to provide a manufacturing solution for obtaining an electrode with an increased energy capacity, wherein manufacturing does not lead to debris or impurities.

Therefore, a method of treating a coating layer of an electrode is provided. The electrode comprises a substrate foil, on which the coating layer is arranged The coating layer comprises an electrode coating material. The coating layer is in an at least partially liquid state. The method comprises conveying the electrode in a conveying direction onto a base plate. The method also comprises applying an oscillating movement to the coating layer configured to reposition the electrode coating material such that the electrode coating material has an uneven and/or locally concentrated distribution on the substrate foil.

By providing such a method, the limitations of conventional techniques (as e.g. described above) may be overcome by minimizing debris or impurities in electrodes. The method may namely reposition the electrode coating material on the substrate foil of the electrode by applying the oscillating movement. Consequently, the electrode coating material reaches an uneven and/or locally concentrated distribution on the substrate foil, or in other words, a coating pattern. The coating pattern may be hence defined by areas om the substrate foil, where more electrode coating material is present and other areas where less electrode coating material is present.

For this purpose, an oscillating movement is applied to the coating layer (i.e. to the electrode coating material), e.g. in the form of vibrations or sound waves, as described in more detail in the following. Re-positioning may in particular be possible, since the coating layer is not (yet) solid, but (still) in a at least partially liquid state, e.g. (immediately) after the coating layer in form of a slurry has been applied or coated on the substrate foil.

Since the method desirably merely (slightly) repositions the electrode coating material on the substrate foil without removing it from the substrate foil (e.g. by a laser treatment), a debris or impurities can be avoided.

The method may also allow to create cavities in the surface of the coating layer. It may be desirable to create as many cavities in the coating layer or its surface as possible, at least in view of maximizing the electrode performance. However, in view of maximizing the energy density, it may be desirable to limit the total number of cavities. Exemplary numbers for possible tradeoff are described below (cf. e.g. size of the cavities). Moreover, the method may have the potential to eliminate the need of any other process steps to produce cavities in the coating layer. The disclosed methods may potentially be faster than conventional methods requiring additional steps like a laser treatment, which may result in a reduction of energy and material demand.

The combination of the substrate foil and the applied (and wet or dried) coating layer may also be referred to as the coated electrode or, more broadly, referred to simply as the electrode. In other words, the electrode may comprise a substrate foil and on top the (partially wet or non-solid) coating layer, which may be dried in a further step.

The coating layer or the electrode coating material may be or may comprise a slurry. A slurry may refer to a thick, liquid or viscous mixture typically composed of solid particles suspended in a liquid. The slurry may be a non-compressible suspension. The slurry may be provided in a slurry reservoir. The slurry reservoir may refer to a containment or storage area designed to hold the slurry. The slurry reservoir may be engineered to handle the specific properties of the slurry, including their density, viscosity, and flow characteristics, ensuring proper storage and controlled dispensing when needed for operations. The slurry reservoir may comprise a mixing unit configured to mix electrode coating material, electrical conductive agents (e.g. carbon black or carbon nanotubes), binding agents (e.g. PVDF), additives, and/or solvents to form a slurry. After the slurry has been applied to the substrate foil, the slurry may be dried to form a coating on the substrate foil. In other words, the coating layer may be an electrode coating layer or active layer of the electrode, which is coated on a substrate foil. The coating layer may be not fully dried.

The electrode coating material may be or may comprise particles.

The coating layer may additionally comprise other materials (beside the electrode coating material), such as a binder, a solvent, an additive and/or a conductive agent.

The coating layer or the electrode coating material may comprise a metal containing materials or a mixture of metals. The used metals, for example, may comprise e.g. lithium, sodium, magnesium, aluminum, potassium and/or calcium. Typically, the coatings may not contain metals in the metallic state. Instead, metal mixed oxides (e.g. in a transition state) may be used for the cathode and graphite or silicon derivatives the anode. The thickness of the coating layer may be greater than or equal to 40 µm to less than or equal to 200 µm, optionally less than or equal to 120 µm, and in certain variations, optionally less than or equal to 60 µm. The coated electrode may have an electrode thickness of 1 µm to 500 µm, more preferably up to 200 µm.

The coated electrode, in particular the coating layer, more in particular the electrode coating material, may serve as an active material for the battery. During the operation of the battery, the active layer may be the material that may undergo a reversible electrochemical reaction during the charge and discharge process. In other words, the coated electrode or active material may be the substance that may participate in the electrochemical reactions producing the flow of electrons within the battery.

The active material, for example, for a negative battery electrode foil (i.e, anode), may comprise silicon, silicon oxides, carbon material, combinations thereof, and composites thereof. For example, the active material may comprise a silicon suboxide-carbon (SiOx/C, 1 ≤ x ≤ 2) composite. Silicon suboxide-carbon (SiOx/C, 1 ≤ x ≤ 2) composite is just one example of an active material. The examples of the active material of the positive battery electrode foil (i.e., cathode) in, for example, Li-ion batteries, include lithium cobalt oxide, lithium manganese oxides, lithium iron phosphate, lithium manganese iron phosphates, lithium nickel manganese cobalt oxide, lithium titanium oxide and lithium cobalt aluminum oxide. The active material of the battery electrode foil may be chosen to guarantee a good electrical conductivity, high thermal stability, and low resistance.

The substrate foil may be a sheet, base or underlying material onto which the coating layer or layer of another material may be applied. In the case of the coated electrode, the substrate foil may refer to the core or base material of the electrode onto which a specific electrode coating material may be applied to achieve certain properties or functions, such as enhanced conductivity, corrosion resistance, or catalytic activity. The coating layer may be an additional layer that, for example, may modify the substrate foil's surface properties or provide specific characteristics to the electrode for its intended application.

The substrate or substrate foil may serve as a positive current collector or a negative current collector. In case the substrate foil serves as a positive current collector (i.e. for the cathode), the substrate foil may be an aluminum foil, typically 10 to 20 µm thick. Aluminum may have a high conductivity and it may be rather stable even at the high potential of the positive electrode. In case the substrate foil serves as a negative current collector (i.e. for the anode), the substrate may be a copper foil, typically 6 to 18 µm thick. Aluminum would be lighter and cheaper but it may not be used at the low potential of the negative electrode due to parasitic formation of a lithium/aluminum alloy.

The substrate foil may comprise a conductive material. The conductive material may comprise, for example, copper, aluminum, nickel-coated copper foil, aluminum-coated copper foil, stainless steel foil, and/or copper-zinc alloy foil. The substrate may be a base foil and/or a mesh, such as a metal mesh. The substrate foil may be based on fiberglass with a metallic coating.

The base plate may refer to a foundational component or surface upon which other parts or structures are placed or attached. The base plate may serves as a stable platform or support for various devices or components within a system, in particular the substrate foil. The base plate may be rigid or flexible. The base plate may also be part of a conveyor belt. The base plate may be either fixed or move in a locally limited section in the conveying direction. The base plate may be a closed plate, for example square, where the stationary shaft may be adjusted. The base plate may have a fixed length and/or width to set the wavelength of the oscillating movement accordingly.

The oscillating movement might refer to a mechanism that moves the base plate or the substrate foil in a repeated back-and-forth motion. In other words, the oscillation movement may be a vibration.

The oscillating movement may be intended to alter or reposition the electrode coating material on the substrate foil in a specific way. By oscillating or moving back and forth, the process may aim to create an uneven distribution of the electrode coating material. Instead of a uniform spread, the electrode coating material may gather in certain areas more than others or form localized concentrations on the substrate foil. This intentional unevenness or concentration may enhance the electrode's performance in targeted areas or achieving specific properties in the coated material. The uneven and/or locally concentrated distribution of electrode coating material may result in cavities in the coating layer. During applying the oscillating movement, the coating layer may be at least partially in a liquid state.

The oscillation movement may also lead to a standing wave in the base plate, the electrode, the substrate foil and/or the coating layer. A standing wave may refer to a specific type of wave pattern where certain points along the wave appear to be standing still, experiencing minimal or no movement. In other words, some areas might exhibit minimal movement (i.e. valleys), while others might display maximum movement or displacement (i.e. mountains). The standing wave may occur due to the interference of two waves traveling in opposite directions, leading to a pattern of constructive and destructive interference. In this context, the oscillation of the system components might generate waves that interact in such a way that they form a standing wave pattern. This phenomenon may have implications for the distribution or behavior of the electrode coating material, potentially affecting its uniformity or arrangement on the substrate foil or electrode.

In particular, particles of the electrode coating material in the coating layer may be moved away from the areas with maximum movement (i.e. mountains) towards the areas with minimal movements (i.e. valleys). This movement of particles from high movement zones to low movement zones may be due to the wave's influence. The parts of the coating layer experiencing less movement may serve as relatively stable areas, attracting or accumulating particles as they may be less affected by the wave's energetic fluctuations compared to the areas experiencing maximum movement.

For example, the specific distribution of electrode coating material may be possible in particular due to the different size of the materials of the coating layer. Since the electrode coating material may have rather large and heavy particles, the particles may tend to remain in the areas with minimal movements. As a result, the electrode coating material can form columns or clusters on the substrate film, between which the cavities are formed, where the other materials of the slurry are concentrated, such as a binder, a solvent, an additive and/or a conductive agent. Consequently, cavities providing relatively thin paths can be created in the coating layer that do not mandatorily appear as actual holes, but rather as areas comprising e.g. a carbon black binder matrix with a less or no electrode coating material.

Furthermore, different patterns of standing waves (e.g. patterns of circular standing waves) may be generated, which spatially overlap each other. For example, a first pattern may be generated at a first position of the electrode and subsequently a second pattern may be generated at a slightly shifted position on the electrode, such that the first and second pattern at least partially overlap. As a result, by the combination of different patterns a complex pattern may be obtained which can have a plurality of cavities or holes or voids in the coating pattern.

The cavities might improve the overall integrity and performance of the electrode by potentially affecting conductivity, active material distribution, and the electrode's electrochemical properties. The cavities (also referred to as holes or channels) within the electrode coating material or coating layer may be designed to serve as ion transport pathways. The ion transport pathways or voids may be intended to facilitate better penetration of ions, especially in thicker electrodes. The ion transport pathways may enhance the movement of ions through the electrodes, which may be more challenging in thicker electrodes due to increased diffusion distances. By introducing ion transport pathways or voids during the manufacturing process, the goal may be to create more accessible and efficient routes for ions to move into and out of the electrode coating material or coating layer, thereby possibly improving the overall performance and efficiency of the battery or electrochemical device. The ion transport pathways may strategically be designed to optimize ion diffusion, in particular the diffusion of lithium ion, and promote better electrochemical performance in thicker electrode structures. In other words, the cavity may be a hollowed-out space within the coating layer.

However, it has been found that generally an uneven and/or locally concentrated distribution of the electrode coating material can allow an enhanced ion transport into the first coating layer and can thus increase the energy capacity of the electrode.

The cavities or ion transport pathways may have a diameter of less than or equal to 200 µm, more preferably less than or equal to 100 µm and in certain variations, optionally less than or equal to 50 µm.

In one aspect, the oscillating movement may comprise a harmonic motion with an amplitude and a wavelength. Furthermore, the wavelength may correlate with a resonant frequency of at least one of: the coating layer and/or the coating material, the electrode, the base plate, and a combination of the base plate, the electrode on top of the base plate and optionally further elements mounted to the base plate.

In one aspect, the further elements may comprise at least one of a substructure, on which the base plate may be mounted, a conveyor roll, wherein the base plate may be curved and forms part of the surface of the conveyor roll and a conveyor belt used to convey the electrode at least in a locally limited area, wherein the base plate may be flexible and forms part of the surface of the conveyor roll.

The base plate may be fixed with respect to the conveyed electrode. The base plate may also be (locally) moveable along the conveying direction, and may have different forms, e.g. be curved and/or be of a flexible or rigid material.

In one aspect, at least one geometric dimension of the base plate and/or of the electrode may correlate with the wavelength.

Furthermore, in particular the width of the electrode which is perpendicular to the conveying direction may correlate with the wavelength.

At least one geometric dimension of the base plate and/or of the electrode or the setting of the oscillating movement (e.g. wavelength and/or amplitude) may be set such that the resulting cavities may have the following dimensions: cavity diameter (or width of the notch) on the surface less than 120 µm, in particular 50µm,
depth of the cavity (or the notch) 30 to 50 µm, e.g. 43 µm (but desirably less than the depth/thickness of the coating layer), and/or
cavities may have each a conical form, wherein the diameter of the cavity decreases along a depth direction.

In one aspect, the base plate may have a length extending in the conveying direction and a width extending perpendicular to the conveying direction. Furthermore, the length may be optionally equal to the width. Furthermore, the length or width of the base plate and/or the width of the electrode may correlate with the wavelength. In particular, the length or width of the base plate or the width of the electrode may be substantially equal to n/2 of the wavelength, wherein n being a natural number of 1 or more.

For example, the length of the base plate may be the first geometric dimension and the width of the base plate may be a second geometric dimension.

When the length or width of the base plate, or specifically the width of the electrode, is approximately half (n/2) of the wavelength of a particular wave, it may correspond to the natural frequency for generating a standing wave. In simpler terms, when the dimensions of the base plate or the electrode may be roughly half the wavelength of a wave, it may coincide with a specific frequency, which may be called the natural frequency. At this natural frequency, the base plate may be more inclined to create a standing wave pattern. This particular setting or dimension may in resonance with the wave's frequency, amplifying the effects of the standing wave within the base plate.

In one aspect, the method may comprise adjusting the wavelength to correlate with a resonant frequency of the base plate or the electrode. Furthermore, the method may comprise adjusting the wavelength to be substantially equal to 2/n of at least one geometric dimension of the base plate, wherein n may be 1, 2, 3, or any following natural number.

In one aspect, the base plate may have a shape of a rectangle, a square or a circle.

In one aspect, the oscillating movement may be applied by an oscillator connected to the base plate, wherein the oscillating movement may be transferred to the coating layer.

An oscillator may be a vibrator, for example. The oscillator may comprise an audio source. The oscillator may generate oscillating movements within a frequency range spanning from 1.5 to 30 MHz. The oscillator may generate oscillating movements with wavelengths ranging between 10 and 200 µm.

In one aspect, the oscillating movement may be applied by an audio source by means of sound waves. The audio source may be positioned above the coating layer and the surface of the coating layer may be facing the audio source such that the coating layer may be excited to the oscillating movement by the sound waves.

The audio source may generate sound waves within a frequency range spanning from 1.5 to 30 MHz. The audio source may generate sound waves with wavelengths ranging between 10 and 200 µm.

In one aspect, at least partially heating drying and/or irradiating the coating layer before the oscillating movement may be applied to the coating layer.

In one aspect, the electrode coating material may be repositioned, such that cavities are formed in the coating layer.

The present disclosure also relates to a system for treating the coating layer of an electrode. The electrode comprises a substrate foil, on which the coating layer is arranged. The coating layer comprises an electrode coating material and being in an at least partially liquid state. The system may comprise a conveyor device and a base plate configured to convey the electrode in a conveying direction onto the base plate. The system may further comprise an excitation device configured to apply an oscillating movement to the coating layer configured to reposition the electrode coating material, such that the electrode coating material has an uneven and/or locally concentrated distribution on the substrate foil.

In other words, the conveyor device may be a conveyor belt configured to convey an electrode tape or foil. The substrate foil may be conveyed from a first position, where the coating layer is applied, to a second position, where the oscillating movement is applied. Typically, the electrode may be continuously moving. However, movement may also be interrupted each time an oscillating movement is applied.

In one aspect, the excitation device may comprise an oscillator connected to the base plate, wherein the oscillating movement may be transferred to the coating layer. Furthermore, the excitation device may comprise an audio source applying sound waves to the coating layer, wherein the audio source may be positioned above the coating layer and the surface of the coating layer may be facing the audio source, wherein the coating layer may be excited to an oscillating movement by the sound waves.

The audio source may comprise, for example, a loudspeaker with an amplifier. The audio source may emit ultrasound waves or sound waves in another (e.g. lower) frequency spectrum.

In one aspect, the base plate may be flexible or rigid and fixed with respect to the conveyed electrode. Furthermore, the system may further comprise a conveyor roll, wherein the base plate may be curved and forms part of the surface of the conveyor roll. Furthermore, the system may further comprise a conveyor belt used to convey the electrode at least in a locally limited area, wherein the base plate may be flexible and form part of the surface of the conveyor roll.

The present disclosure also relates to a manufacturing line for manufacturing an electrode. The manufacturing line may comprise a coating device configured to coat a substrate foil with a coating layer. The manufacturing line may comprise a system for treating the coating layer according to examples of the present disclosure. The manufacturing line may comprise a convection oven to dry the coating layer in particular dry the complete coating layer.

In other words, the convection oven may apply a heating and/or drying treatment. The heating and/or drying treatment may occur partially, implying that it might not completely dry the coating layer but only the surface of the coating layer. The purpose of this treatment may be to modify the condition or properties of the coating layer in such a way that it may enhance the formation of cavities in the coating layer. By treating the coating layer with a radiation dryer, craters may be avoided. Furthermore, strong unevenness around the created cavity may be avoided as the surface may be already partially solid.

The coating layer may be applied on both sides of the substrate foil. This approach may refer to double-sided (or two-sided) coating. Double-sided coating may comprise the simultaneous application of an electrode coating material from both the top and bottom of a substrate foil. Alternatively, it may involve a sequential process where the substrate foil may initially be coated from the top side, followed by a step where the substrate foil may be flipped, and the reverse side is subsequently coated from the top.

An electrode may be optionally manufactured by a method according to examples of the present disclosure and/or by using a system according to examples of the present disclosure.

In summary, a sound source may be used to redistribute the close-up order of the particles in the coating that may not yet have dried. State of the art methods, such as invasive structuring of electrodes (e.g. using lasers), may create holes with diameters on a scale of 50 µm. This may create a dead volume that might be filled with electrolyte, which may have a negative effect on the final energy density of the resulting cell. Paths with a diameter of 50 µm may not be necessary for optimum ion supply to the deeper coating areas. Thinner paths would be desirable, but these may difficult to create using invasive methods. By using oscillating movement or sound, potentially thinner paths may be created that do not appear as actual holes but as 5 - 10 µm thick paths with more carbon black binder matrix and less active material. After the slurry has been coated onto the substrate foil and before it may be dried, a sound source may be used to rearrange the particles in the still-liquid coating. The targeted alignment of the particles may result in a better supply of ions to the deeper coating areas. If sound is used for structuring, auxiliary particles (such as used for magnetic alignment of particles) may be dispensed with.

It may be that the system comprises components to better control the oscillating movement or the quality of the cavities. For example, the system may comprise a control unit configured to control the oscillating movement as a function of a conveying speed of the electrode. The system may also comprise a housing enclosing the base plate and the electrode, wherein the housing is configured to regulate the atmospheric conditions at the position where the oscillating movement is applied to the coating layer. The housing may be filled with a medium, wherein the medium may be configured to enable the propagation of sound waves. The system may comprise circuitry configured to generate diverse patterns while precisely regulating the oscillating movement.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 schematically shows a system 100 for treating a coating layer 140 of an electrode 120 with a base plate 110 and an oscillator 180 in a side view according to examples of the present disclosure.
Fig. 2 schematically shows a system 100 for treating a coating layer 140 of an electrode 120 with a base plate 110 and an audio source 200 in a side view according to examples of the present disclosure.
Fig. 3 shows a schematic drawing of an electrode 300 with a treated coating layer 140 in a side view according to examples of the present disclosure.
Fig. 4A schematically shows the formation of particles 400 of the active material, i.e. the electrode coating material, in the coating layer 140 applied to the substrate foil 130 without oscillating movement.
Fig. 4B schematically shows the formation of particles 400 in the coating layer 140 applied to the substrate foil 130 after applying an oscillating movement to the coating layer 130 according to examples of the present disclosure.
Fig. 5 shows a schematic drawing of a lithium-ion battery 500 during discharging with an anode 510 and a cathode 520 according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

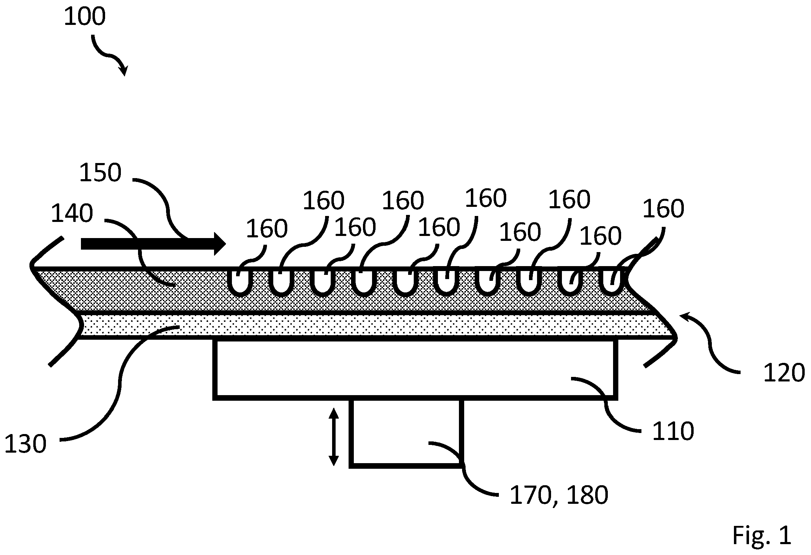

Fig. 1 schematically shows a system 100 for treating a coating layer 140 of an electrode 120 with a base plate 110 and an oscillator 180 in a side view according to examples of the present disclosure.

An electrode 120 in preparation may be provided. The electrode may be conveyed in a conveying direction 150. The electrode 120 comprises a substrate foil 130 and a coating layer 140 applied onto the substrate foil 130. The coating layer 140 may be still in an at least partially liquid state, e.g. because the coating layer has just been coated or applied onto the substrate foil (e.g. in the form of a slurry). The coating layer may comprise an electrode coating material and other materials, such as a binder, a solvent, an additive and/or a conductive agent.

The system 100 may comprise an excitation device 170 configured to apply an oscillating movement to the coating layer 140 configured to reposition the electrode coating material, such that the distribution of the electrode coating material has an uneven and/or locally concentrated distribution on the substrate foil 130. The excitation device 170 comprises an oscillator 180 connected to the base plate 110, wherein the oscillating movement is transferred to the coating layer 140.

In this example, the base plate may be fixed with respect to the moving, i.e. conveyed electrode. However, the base plate may also be moveable. For example, the base plate may be part of a conveyor roll, wherein the base plate is curved and forms part of the surface of the conveyor roll (not shown in fig. 1) It is further possible that the base plate is part of a conveyor belt used to convey the electrode at least in a locally limited area, wherein the base plate is flexible and forms part of the surface of the conveyor roll (also not shown).

When the oscillator 180 applies an oscillating movement to the base plate 110, a standing wave may occur within the base plate 110 and the electrode 120 positioned on the base plate 110, in particular in the electrode coating material. The standing wave may occur due to the interference of two waves traveling in opposite directions, leading to a pattern of constructive and destructive interference. The oscillating movement might generate waves that interact in such a way that they form a standing wave pattern. This phenomenon may have implications for the distribution or behavior of the coating material within the coating layer 140, potentially affecting its uniformity or arrangement on the substrate foil 130 or electrode 120.

In particular, particles in the coating layer 140 may be moved away from the areas with maximum movement (i.e. mountains) towards the areas with minimal movements (i.e. valleys). This movement of particles from high movement zones to low movement zones may be due to the wave's influence. In sum, the oscillating movement may form a plurality of cavities 160 in the coating layer 160.

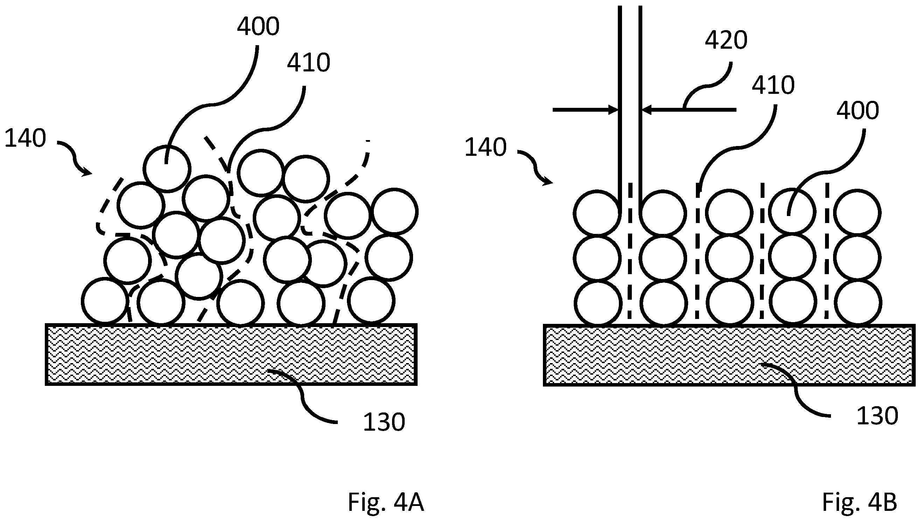

For example, the specific distribution of electrode coating material may be possible in particular due to the different size of the materials of the coating layer. Since the electrode coating material may have rather large and heavy particles, the particles may tend to remain in the areas with minimal movements. As a result, the electrode coating material can form columns or clusters on the substrate film (also cf. fig. 4B), between which the cavities are formed, where the other materials of the slurry are concentrated, such as a binder, a solvent, an additive and/or a conductive agent. Consequently, cavities providing relatively thin paths can be created in the coating layer that do not mandatorily appear as actual holes, but rather as areas comprising e.g. a carbon black binder matrix with a less or no electrode coating material.

Furthermore, different patterns of standing waves (e.g. patterns of circular standing waves) may be generated, which spatially overlap each other. For example, a first pattern may be generated at a first position of the electrode and subsequently a second pattern may be generated at a second, slightly shifted position on the electrode, such that the first and second pattern at least partially overlap. The first and second positions may be offset to each other in the conveying direction 150, a width direction of the substrate foil (in the view of fig. 1 a depth direction), or a combination of both directions.. As a result, by the combination of different patterns a complex pattern may be obtained which can have a plurality of cavities or holes or voids 160 in the coating pattern.

Accordingly, the oscillator 180 may be configured to generate different patterns of standing waves, which are offset from each other in a direction parallel to the substrate foil. For example, the oscillator may comprise an array of oscillators distributed over the base plate 110 (not shown).

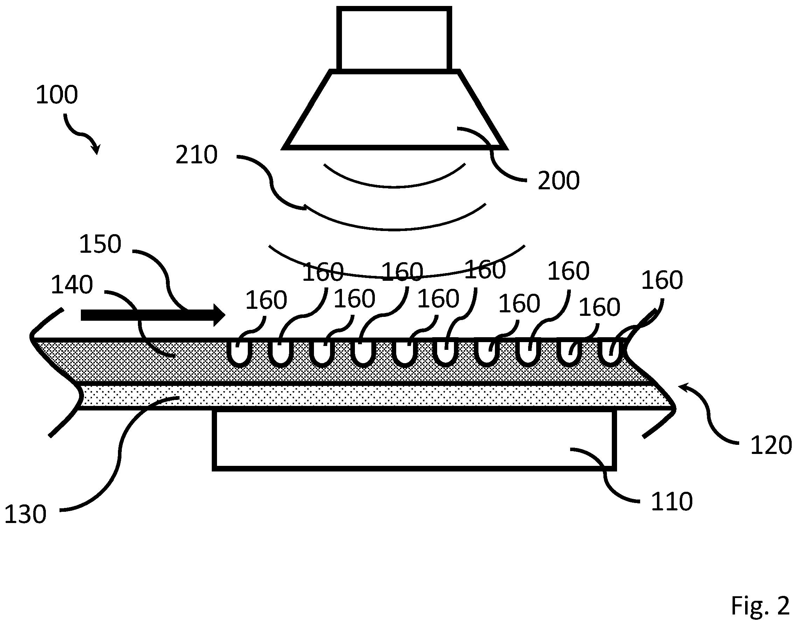

Fig. 2 schematically shows a system 100 for treating a coating layer 140 of an electrode 120 with a base plate 110 and an audio source 200 in a side view according to examples of the present disclosure.

The audio source 200 is positioned above the coating layer 140 and the surface of the coating layer 140 is facing the audio source 200, such that the coating layer 140 is excited to the oscillating movement by the sound waves 210. The audio source may generate sound waves 210 within a frequency range spanning from 1.5 to 30 MHz. As a result, a standing wave may occur within the base plate 110 and the electrode 120 positioned on the base plate 110, in particular in the electrode coating material. The oscillating movement may form a plurality of cavities 160 in the coating layer 160.

The audio source 200 may may be configured to generate different patterns of standing waves, which are offset from each other in a direction parallel to the substrate foil. For example, the audio source 200 may comprise an array of loudspeakers distributed over the electrode (not shown).

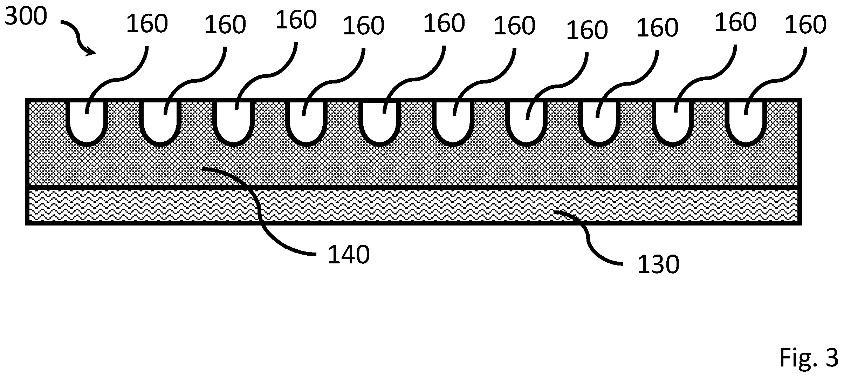

Fig. 3 shows a schematic drawing of an electrode 300 with a treated coating layer 140 in a side view according to examples of the present disclosure. The coated electrode 300 may be manufactured using the system 100 according to examples of the present disclosure. The coated electrode 300 comprises multiple cavities 160.

The cavities 160 may have a round cross-sectional area and a diameter of less than or equal to 200 µm, more preferably less than or equal to 100 µm and in certain variations, optionally less than or equal to 50 µm. Once the coated electrode 300 is incorporated into a battery, the cavities 160 have the potential to be filled with electrolyte. The cavities 160 might improve the overall integrity and performance of the electrode by potentially affecting conductivity, active material distribution, and the electrode's electrochemical properties.

For optimum performance of the coated electrode 300, it is desirable to have as many cavities 160 or small holes as possible. The cavities 160 may be the result of a treatment with an excitation device 170 configured to apply an oscillating movement to the coating layer 140 configured to reposition the electrode coating material, such that the electrode coating material has an uneven and/or locally concentrated distribution on the substrate foil 130. The oscillating movement may result in rows of cavities 160 that are intentionally offset from each other.

The coated electrode 300 comprises the substrate foil 130 and the coating layer 140. The one-side coated electrode 300 may serve as an anode in a lithium-ion. The substrate foil 130 may be a negative current collector. The substrate foil 130 may be a copper foil (typically 8 to 18 µm thick). As one example, the coating layer 140 may comprise graphite (95% by weight) as the active material, carbon black (1% by weight) as the conductive additive, carboxymethyl cellulose (2% by weight) as the binder, and styrene-butadiene-rubber (2% by weight) as an additive. The substrate foil 130 has a thickness of about 10 µm and the coating layer 140 has a thickness of about 80 µm in this example.

Fig. 4A schematically shows the formation of particles 400 of the active material, i.e. the electrode coating material, in the coating layer 140 applied to the substrate foil 130 without oscillating movement.

When the slurry 160 is not subjected to an oscillating movement, the resulting coating layer 140 may exhibit high tortuosity. Tortuosity may refer to the degree of complexity or irregularity in the path or transport pathway 410 through which ions (e.g. Li-ions) move within a porous material. In this context, the high tortuosity in the coating layer 140 indicates that the particles 400 within the coating layer 140 are arranged in a complex manner, possibly leading to a less and/or longer ion transport pathways 410 for passing through the coating layer 140. The high tortuosity might reduce the performance of the electrode.

Fig. 4B schematically shows the formation of particles 400 in the coating layer 140 applied to the substrate foil 130 after applying an oscillating movement to the coating layer 130 according to examples of the present disclosure.

Due to the oscillating movement, the resulting coating layer 130 may exhibit low tortuosity. Lower tortuosity may indicate that the particles 400 within the coating layer 140 may organized in a more ordered or straightforward manner, potentially facilitating more direct ion transport pathways 410 for ions passing through the coating layer 140. This decreased complexity in particle arrangement may enhance the performance of the electrode.

The system of the present disclosure may employ oscillating movements or vibrations in a manner that facilitates the propagation of a standing wave across the base plate. The heavier electrode coating material 400 (i.e. heavier electrode coating particles) tends to remain in the valleys of the standing wave. As a result, the electrode coating material can form columns or clusters on the substrate film, between which the cavities 410 are formed, where the other materials of the electrode coating material are concentrated, such as a binder, a solvent, an additive and/or a conductive agent. Consequently, cavities providing relatively thin paths can be created in the coating layer that do not mandatorily appear as actual holes, but rather as areas comprising e.g. a carbon black binder matrix with a less or no electrode coating material. The cavities may provide paths, in particular ion transport paths in the electrode. The ion transport pathways 410 or cavities may have a diameter 420 of less than or equal to 200 µm, more preferably less than or equal to 100 µm and in certain variations, optionally less than or equal to 50 µm, most preferably 5 to 10 µm. The ion transport pathways 410 or cavities may optionally be filled with electrolyte.

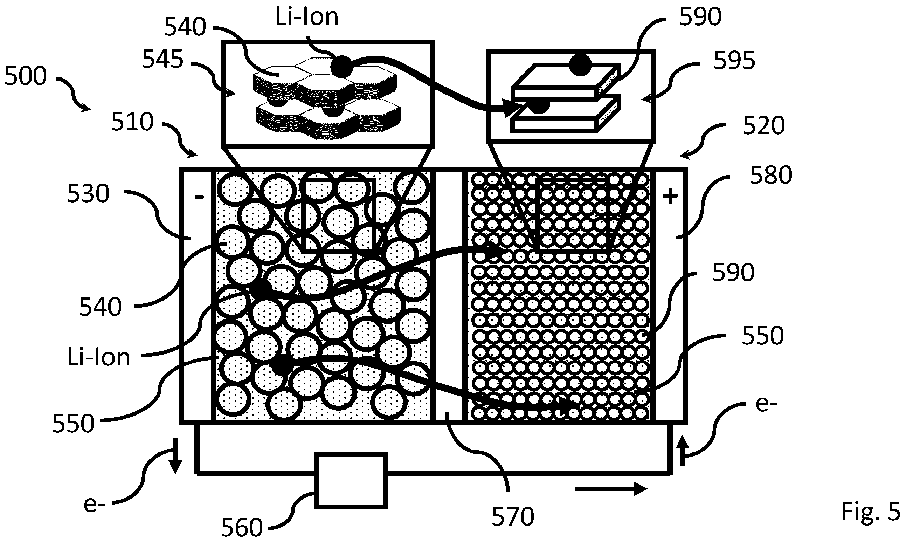

Fig. 5 shows a schematic drawing of a lithium-ion battery 500 during discharging with an anode 510 and a cathode 520 according to examples of the present disclosure. This example illustrates a basic scenario featuring two electrodes (anode 510 and cathode 520) to emphasize the roles of the components within the lithium-ion battery 500. However, it is widely acknowledged that multiple electrodes are typically stacked together to form a lithium-ion battery 500. Of course, a lithium-ion battery is only one possible use case of the coated electrodes of the present disclosure. The electrodes, as manufactured and treated by a method according to the present disclosure may also be used in any types of energy storage devices, e.g. in capacitors.

The anode 510 or cathode 520 may be a coated electrode according to any examples of the present disclosure. For example, the anode 510 or cathode 520 may be a one-side coated electrode 300 according to examples of the present disclosure.

The lithium-ion battery 500 may be rechargeable. In case of discharging the lithium-ion battery 500, the positive electrode is called "cathode" and the negative electrode is called "anode". This terminology is different during the charging process, where the positive electrode may work as anode and the negative electrode may work as cathode.

The anode 510 comprises a first substrate 530 and a first active material 540. The first the substrate 530 may be a copper foil, typically 8 to 18 µm thick. The cathode 520 comprises a second substrate 580 and a second active material 590. The second substrate 580 may be an aluminum foil, typically 15 to 20 µm thick. The lithium-ion battery 500 may further comprise a separator 570 that is positioned between the first active material 540 and the second active material 590. The separator 570 may be a porous membrane to electrically isolate the anode 510 and the cathode 520 from each other.

The lithium-ion battery 500 further usually comprises an ion-conducting electrolyte 550 (e.g. containing a dissociated lithium conducting salt). The ion-conducting electrolyte 550 may wet the separator 570, the first active material 540 and the second active material 590 to enable a flow of ions between the anode 510 and the cathode 520.

The lithium-ion battery 500 is connected to a load 560. Loads may be any device or component that consumes electrical energy, such as electric motors, heaters, computers, industrial machinery, light bulbs or electronic devices.

During discharging of the lithium-ion battery 500, the lithium ions (Li-Ion) may migrate from the first active material 540 of the anode 510 through the electrolyte 550 and the separator 570 to the second active material 590 of the cathode 520. Simultaneously, electrons (e-), serving as carriers of electricity, migrate from the first substrate 530 of the anode 510 through an external electrical connection (a cable), powering the load 560, and reaching the second substrate 580 of the cathode 520.

During charging, the process may be reversed: Lithium ions (Li-Ion) migrate from the second active material 590 through the electrolyte 550 and the separator 570 to the first active material 540. Simultaneously, electrons generated from an external power source move may enter the anode 510 and may provide energy to force the lithium ions back to their original location within the first active material 540.

Close-up 545 provides a schematic depiction, offering a detailed view of the process within the first active material 540. Meanwhile, close-up 595 similarly schematically illustrates the process occurring within the second active material 590 in greater detail.

A common first active material 540 of an anode 510 may be graphitic carbon, which may have a layered structure of carbon atoms in graphene layers shown in the close-up 545. During charging, lithium ions may be intercalated between the layers, and during discharging, lithium leaves the graphite. Graphite may be stable even without lithium and can be almost completely discharged. For complete discharging, the reaction at the negative electrode is:

*LiC₆ → Li⁺ + e⁻ +* 6C

For every mole (7g) of active lithium, six moles (72g) of carbon may act as hosts during charging.

A traditional second active material 590 of a cathode 520 is, for example, lithiated cobalt oxide (LiCoO2). The active material 590 may have a layered structure comprising cobalt, oxygen, and lithium ion layers shown in the close-up 595. During charging, lithium leaves the crystal structure (deintercalation) and returns during discharging (intercalation), but only about 50% of the lithium may be utilized. If more than half leaves, it might cause structural collapse, releasing oxygen and potentially leading to thermal runaway. For complete discharging, the reaction at the positive electrode is:

2*Li*_{0.5}*CoO*₂ *+ Li*⁺ *+ e⁻* → 2*LiCoO*₂

To achieve complete discharging, two moles (189g) of Li0.5CoO2 may be required for every mole (7g) of active lithium.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A method of treating a coating layer (140) of an electrode (120), the electrode comprising a substrate foil (130), on which the coating layer (140) is arranged, the coating layer (140) comprising an electrode coating material and being in an at least partially liquid state, the method comprising:
conveying the electrode (120) in a conveying direction (150) onto a base plate (110), and
applying an oscillating movement to the coating layer (140) configured to reposition the electrode coating material, such that the electrode coating material has an uneven and/or locally concentrated distribution on the substrate foil (130).

2. The method of claim 1, wherein
the oscillating movement comprises a harmonic motion with an amplitude and a wavelength,
wherein the wavelength correlates with a resonant frequency of at least one of:
• the coating layer (140) and/or the coating material,
• the electrode (120),
• the base plate (110), and
• a combination of the base plate (110), the electrode (120) on top of the base plate (110) and optionally further elements mounted to the base plate (110).

3. The method of claim 2, wherein
the further elements comprise at least one of:
a substructure, on which the base plate (110) is mounted,
a conveyor roll, wherein the base plate (110) is curved and forms part of the surface of the conveyor roll, and
a conveyor belt used to convey the electrode (120) at least in a locally limited area, wherein the base plate (110) is flexible and forms part of the surface of the conveyor roll.

4. The method of any one of the preceding claims, wherein
at least one geometric dimension of the base plate (110) and/or of the electrode (120) correlates with the wavelength.

5. The method according to any one of the preceding claims, wherein
the base plate (110) has a length extending in the conveying direction (150) and a width extending perpendicular to the conveying direction (150), wherein the length is optionally equal to the width,
wherein the length or width of the base plate (110) and/or the width of the electrode (120) correlates with the wavelength,
in particular the length or width of the base plate (110) or the width of the electrode (120) is substantially equal to n/2 of the wavelength, wherein n being a natural number of 1 or more.

6. The method according to any one of the preceding claims, further comprising:
adjusting the wavelength to correlate with a resonant frequency of the base plate (110) or the electrode (120), or
adjusting the wavelength to be substantially equal to 2/n of at least one geometric dimension of the base plate (110), wherein n is 1, 2, 3, or any following natural number.

7. The method according to any one of the preceding claims, wherein
the base plate (110) has a shape of a rectangle, a square or a circle.

8. The method according to any one of the preceding claims, wherein
the oscillating movement is applied by an oscillator (170) connected to the base plate (110), wherein the oscillating movement is transferred to the coating layer (140).

9. The method according to any one of the preceding claims, wherein
the oscillating movement is applied by an audio source (200) by means of sound waves (210), wherein the audio source (200) is positioned above the coating layer (140) and the surface of the coating layer (140) is facing the audio source (200), such that the coating layer (140) is excited to the oscillating movement by the sound waves (210).

10. The method according to any one of the preceding claims, further comprising: at least partially heating, drying and/or irradiating the coating layer (140), before the oscillating movement is applied to the coating layer (140).

11. The method according to any one of the preceding claims, wherein
the electrode coating material is repositioned, such that cavities (160) are formed in the coating layer (140).

12. A system (100) for treating a coating layer (140) of an electrode (120), the electrode comprising a substrate foil, on which the coating layer is arranged, the coating layer (140) comprising an electrode coating material and being in an at least partially liquid state, the system (100) comprising:
a conveyor device and a base plate (110) configured to convey the electrode (120) in a conveying direction (150) onto the base plate (110),
an excitation device configured to apply an oscillating movement to the coating layer (140) configured to reposition the electrode coating material, such that the electrode coating material has an uneven and/or locally concentrated distribution on the substrate foil (130).

13. The system (100) of claim 12, wherein
the excitation device comprises at least one of:
an oscillator connected to the base plate (110), wherein the oscillating movement is transferred to the coating layer (140), and
an audio source (200) applying sound waves (210) to the coating layer (140), wherein the audio source (200) is positioned above the coating layer (140) and the surface of the coating layer (140) is facing the audio source (200), wherein the coating layer (140) is excited to an oscillating movement by the sound waves (210).

14. The system (100) of claim 12 or 13, wherein
the base plate (110) is flexible or rigid and fixed with respect to the conveyed electrode (120), and/or
the system (100) further comprises:
a conveyor roll, wherein the base plate (110) is curved and forms part of the surface of the conveyor roll, or
a conveyor belt used to convey the electrode (120) at least in a locally limited area, wherein the base plate (110) is flexible and forms part of the surface of the conveyor roll.

15. A manufacturing line for manufacturing an electrode (120), the manufacturing line comprising:
a coating device configured to coat a substrate foil (130) with a coating layer (140),
a system (100) for treating the coating layer (140) according to any of the preceding claims, and
a convection oven to dry the coating layer (140), in particular dry the complete coating layer (140).

## Patentansprüche

1. Verfahren zur Behandlung einer Beschichtungsschicht (140) einer Elektrode (120), wobei die Elektrode eine Substratfolie (130) umfasst, auf der die Beschichtungsschicht (140) angeordnet ist, wobei die Beschichtungsschicht (140) ein Elektrodenbeschichtungsmaterial umfasst und sich in einem zumindest teilweise flüssigen Zustand befindet, wobei das Verfahren umfasst:
Fördern der Elektrode (120) in einer Förderrichtung (150) auf eine Grundplatte (110), und Aufbringen einer Schwingungsbewegung auf die Beschichtungsschicht (140), die dazu eingerichtet ist, das Elektrodenbeschichtungsmaterial so umzuverteilen, dass das Elektrodenbeschichtungsmaterial eine ungleichmäßige und/oder örtlich konzentrierte Verteilung auf der Substratfolie (130) aufweist.

2. Verfahren nach Anspruch 1, wobei
die Schwingungsbewegung eine harmonische Bewegung mit einer Amplitude und einer Wellenlänge umfasst,
wobei die Wellenlänge mit einer Resonanzfrequenz von mindestens einem der folgenden Elemente korreliert:
• der Beschichtungsschicht (140) und/oder dem Beschichtungsmaterial,
• der Elektrode (120),
• der Grundplatte (110), und
• einer Kombination aus der Grundplatte (110), der auf der Grundplatte (110) befindlichen Elektrode (120) und optional weiteren an der Grundplatte (110) befestigten Elementen.

3. Verfahren nach Anspruch 2, wobei
die weiteren Elemente mindestens eines der folgenden umfassen:
eine Unterkonstruktion, auf der die Grundplatte (110) angebracht ist,
eine Förderwalze, wobei die Grundplatte (110) gekrümmt ist und einen Teil der Oberfläche der Förderwalze bildet, und
ein Förderband, das zum Fördern der Elektrode (120) zumindest in einem örtlich begrenzten Bereich verwendet wird, wobei die Grundplatte (110) flexibel ist und einen Teil der Oberfläche der Förderwalze bildet.

4. Verfahren nach irgendeinem der vorhergehenden Ansprüche, wobei
mindestens eine geometrische Abmessung der Grundplatte (110) und/oder der Elektrode (120) mit der Wellenlänge korreliert.

5. Verfahren nach irgendeinem der vorhergehenden Ansprüche, wobei
die Grundplatte (110) eine sich in der Förderrichtung (150) erstreckende Länge und eine sich senkrecht zur Förderrichtung (150) erstreckende Breite aufweist,
wobei die Länge optional gleich der Breite ist,
wobei die Länge oder Breite der Grundplatte (110) und/oder die Breite der Elektrode (120) mit der Wellenlänge korreliert,
wobei insbesondere die Länge oder Breite der Grundplatte (110) oder die Breite der Elektrode (120) im Wesentlichen gleich n/2 der Wellenlänge ist, wobei n eine natürliche Zahl von 1 oder größer ist.

6. Verfahren nach irgendeinem der vorhergehenden Ansprüche, ferner umfassend:
Einstellen der Wellenlänge, sodass sie mit einer Resonanzfrequenz der Grundplatte (110) oder der Elektrode (120) korreliert, oder
Einstellen der Wellenlänge, sodass sie im Wesentlichen gleich 2/n mindestens einer geometrischen Abmessung der Grundplatte (110) ist, wobei n 1, 2, 3 oder eine beliebige weitere natürliche Zahl ist.

7. Verfahren nach irgendeinem der vorhergehenden Ansprüche, wobei
die Grundplatte (110) die Form eines Rechtecks, eines Quadrats oder eines Kreises aufweist.

8. Verfahren nach irgendeinem der vorhergehenden Ansprüche, wobei
die Schwingungsbewegung durch einen mit der Grundplatte (110) verbundenen Oszillator (170) aufgebracht wird, wobei die Schwingungsbewegung auf die Beschichtungsschicht (140) übertragen wird.

9. Verfahren nach irgendeinem der vorhergehenden Ansprüche, wobei
die Schwingungsbewegung mittels Schallwellen (210) durch eine Schallquelle (200) aufgebracht wird, wobei die Schallquelle (200) oberhalb der Beschichtungsschicht (140) angeordnet ist und die Oberfläche der Beschichtungsschicht (140) der Schallquelle (200) zugewandt ist, sodass die Beschichtungsschicht (140) durch die Schallwellen (210) zu der Schwingungsbewegung angeregt wird.

10. Verfahren nach irgendeinem der vorhergehenden Ansprüche, ferner umfassend: zumindest teilweises Erwärmen, Trocknen und/oder Bestrahlen der Beschichtungsschicht (140), bevor die Schwingungsbewegung auf die Beschichtungsschicht (140) aufgebracht wird.

11. Verfahren nach irgendeinem der vorhergehenden Ansprüche, wobei
das Elektrodenbeschichtungsmaterial so umverteilt wird, dass Hohlräume (160) in der Beschichtungsschicht (140) gebildet werden.

12. System (100) zur Behandlung einer Beschichtungsschicht (140) einer Elektrode (120), wobei die Elektrode eine Substratfolie umfasst, auf der die Beschichtungsschicht angeordnet ist, wobei die Beschichtungsschicht (140) ein Elektrodenbeschichtungsmaterial umfasst und sich in einem zumindest teilweise flüssigen Zustand befindet, wobei das System (100) umfasst:
eine Fördereinrichtung und eine Grundplatte (110), die dazu eingerichtet sind, die Elektrode (120) in einer Förderrichtung (150) auf die Grundplatte (110) zu fördern,
eine Anregungseinrichtung, die dazu eingerichtet ist, eine Schwingungsbewegung auf die Beschichtungsschicht (140) aufzubringen, die dazu eingerichtet ist, das Elektrodenbeschichtungsmaterial so umzuverteilen, dass das Elektrodenbeschichtungsmaterial eine ungleichmäßige und/oder örtlich konzentrierte Verteilung auf der Substratfolie (130) aufweist.

13. System (100) nach Anspruch 12, wobei
die Anregungseinrichtung mindestens eines der folgenden umfasst:
einen mit der Grundplatte (110) verbundenen Oszillator, wobei die Schwingungsbewegung auf die Beschichtungsschicht (140) übertragen wird, und
eine Schallquelle (200), die Schallwellen (210) auf die Beschichtungsschicht (140) aufbringt, wobei die Schallquelle (200) oberhalb der Beschichtungsschicht (140) angeordnet ist und die Oberfläche der Beschichtungsschicht (140) der Schallquelle (200) zugewandt ist, wobei die Beschichtungsschicht (140) durch die Schallwellen (210) zu einer Schwingungsbewegung angeregt wird.

14. System (100) nach Anspruch 12 oder 13, wobei
die Grundplatte (110) flexibel oder starr und in Bezug auf die geförderte Elektrode (120) feststehend ist, und/oder
das System (100) ferner umfasst:
eine Förderwalze, wobei die Grundplatte (110) gekrümmt ist und einen Teil der Oberfläche der Förderwalze bildet, oder
ein Förderband, das zum Fördern der Elektrode (120) zumindest in einem örtlich begrenzten Bereich verwendet wird, wobei die Grundplatte (110) flexibel ist und einen Teil der Oberfläche der Förderwalze bildet.

15. Fertigungslinie zur Herstellung einer Elektrode (120), wobei die Fertigungslinie umfasst:
eine Beschichtungsvorrichtung, die dazu eingerichtet ist, eine Substratfolie (130) mit einer Beschichtungsschicht (140) zu beschichten,
ein System (100) zur Behandlung der Beschichtungsschicht (140) nach einem der vorhergehenden Ansprüche, und
einen Konvektionsofen zum Trocknen der Beschichtungsschicht (140), insbesondere zum Trocknen der gesamten Beschichtungsschicht (140).

## Revendications

1. Procédé de traitement d'une couche de revêtement (140) d'une électrode (120), l'électrode comprenant une feuille de substrat (130) sur laquelle est disposée la couche de revêtement (140), la couche de revêtement (140) comprenant un matériau de revêtement d'électrode et se trouvant dans un état au moins partiellement liquide, le procédé comprenant :
l'acheminement de l'électrode (120) suivant une direction d'acheminement (150) sur une plaque de base (110), et
l'application à la couche de revêtement (140) d'un mouvement oscillant configuré pour redistribuer le matériau de revêtement d'électrode, de sorte que le matériau de revêtement d'électrode présente une répartition non uniforme et/ou localement concentrée sur la feuille de substrat (130).

2. Procédé selon la revendication 1, dans lequel
le mouvement oscillant comprend un mouvement harmonique présentant une amplitude et une longueur d'onde,
la longueur d'onde étant corrélée avec une fréquence de résonance d'au moins un des éléments suivants :
• la couche de revêtement (140) et/ou le matériau de revêtement,
• l'électrode (120),
• la plaque de base (110), et
• une combinaison de la plaque de base (110), de l'électrode (120) située sur la plaque de base (110) et éventuellement d'autres éléments montés sur la plaque de base (110).

3. Procédé selon la revendication 2, dans lequel
les autres éléments comprennent au moins un des éléments suivants :
une sous-structure sur laquelle est montée la plaque de base (110),
un rouleau transporteur, la plaque de base (110) étant incurvée et formant une partie de la surface du rouleau transporteur, et
une bande transporteuse utilisée pour acheminer l'électrode (120) au moins dans une zone localement limitée, la plaque de base (110) étant souple et formant une partie de la surface du rouleau transporteur.

4. Procédé selon l'une quelconque des revendications précédentes, dans lequel
au moins une dimension géométrique de la plaque de base (110) et/ou de l'électrode (120) est corrélée avec la longueur d'onde.

5. Procédé selon l'une quelconque des revendications précédentes, dans lequel
la plaque de base (110) présente une longueur s'étendant suivant la direction d'acheminement (150) et une largeur s'étendant perpendiculairement à la direction d'acheminement (150),
la longueur étant éventuellement égale à la largeur,
la longueur ou la largeur de la plaque de base (110) et/ou la largeur de l'électrode (120) étant corrélée avec la longueur d'onde,
en particulier la longueur ou la largeur de la plaque de base (110) ou la largeur de l'électrode (120) étant sensiblement égale à n/2 de la longueur d'onde, n étant un nombre naturel supérieur ou égal à 1.

6. Procédé selon l'une quelconque des revendications précédentes, comprenant en outre :
le réglage de la longueur d'onde afin qu'elle soit corrélée avec une fréquence de résonance de la plaque de base (110) ou de l'électrode (120), ou
le réglage de la longueur d'onde afin qu'elle soit sensiblement égale à 2/n d'au moins une dimension géométrique de la plaque de base (110), n étant 1, 2, 3 ou tout nombre naturel suivant.

7. Procédé selon l'une quelconque des revendications précédentes, dans lequel
la plaque de base (110) a la forme d'un rectangle, d'un carré ou d'un cercle.

8. Procédé selon l'une quelconque des revendications précédentes, dans lequel
le mouvement oscillant est appliqué par un oscillateur (170) relié à la plaque de base (110), le mouvement oscillant étant transmis à la couche de revêtement (140).

9. Procédé selon l'une quelconque des revendications précédentes, dans lequel
le mouvement oscillant est appliqué par une source sonore (200) au moyen d'ondes sonores (210), la source sonore (200) étant disposée au-dessus de la couche de revêtement (140) et la surface de la couche de revêtement (140) étant orientée vers la source sonore (200), de sorte que la couche de revêtement (140) est excitée par les ondes sonores (210) pour effectuer le mouvement oscillant.

10. Procédé selon l'une quelconque des revendications précédentes, comprenant en outre : le chauffage, le séchage et/ou l'irradiation au moins partiels de la couche de revêtement (140) avant l'application du mouvement oscillant à la couche de revêtement (140).

11. Procédé selon l'une quelconque des revendications précédentes, dans lequel
le matériau de revêtement d'électrode est redistribué de telle sorte que des cavités (160) se forment dans la couche de revêtement (140).

12. Système (100) de traitement d'une couche de revêtement (140) d'une électrode (120), l'électrode comprenant une feuille de substrat sur laquelle est disposée la couche de revêtement, la couche de revêtement (140) comprenant un matériau de revêtement d'électrode et se trouvant dans un état au moins partiellement liquide, le système (100) comprenant :
un dispositif d'acheminement et une plaque de base (110) configurés pour acheminer l'électrode (120) suivant une direction d'acheminement (150) sur la plaque de base (110),
un dispositif d'excitation configuré pour appliquer à la couche de revêtement (140) un mouvement oscillant configuré pour redistribuer le matériau de revêtement d'électrode, de sorte que le matériau de revêtement d'électrode présente une répartition non uniforme et/ou localement concentrée sur la feuille de substrat (130).

13. Système (100) selon la revendication 12, dans lequel
le dispositif d'excitation comprend au moins un des éléments suivants :
un oscillateur relié à la plaque de base (110), le mouvement oscillant étant transmis à la couche de revêtement (140), et
une source sonore (200) appliquant des ondes sonores (210) à la couche de revêtement (140), la source sonore (200) étant disposée au-dessus de la couche de revêtement (140) et la surface de la couche de revêtement (140) étant orientée vers la source sonore (200), la couche de revêtement (140) étant excitée par les ondes sonores (210) pour effectuer un mouvement oscillant.

14. Système (100) selon la revendication 12 ou 13, dans lequel
la plaque de base (110) est souple ou rigide et fixe par rapport à l'électrode (120) acheminée, et/ou
le système (100) comprend en outre :
un rouleau transporteur, la plaque de base (110) étant incurvée et formant une partie de la surface du rouleau transporteur, ou
une bande transporteuse utilisée pour acheminer l'électrode (120) au moins dans une zone localement limitée, la plaque de base (110) étant souple et formant une partie de la surface du rouleau transporteur.

15. Ligne de fabrication d'une électrode (120), la ligne de fabrication comprenant :
un dispositif de revêtement configuré pour revêtir une feuille de substrat (130) d'une couche de revêtement (140),
un système (100) de traitement de la couche de revêtement (140) selon l'une quelconque des revendications précédentes, et
un four à convection destiné à sécher la couche de revêtement (140), notamment à sécher la totalité de la couche de revêtement (140).
